# EUROPEAN PATENT SPECIFICATION

(11) **EP 1 685 939 B1**
(45) Date of publication and mention of the grant of the patent: **18.03.2009**
(21) Application number: 06001212.7
(22) Date of filing: 20.01.2006
(51) Int. Cl.: B29C 45/26, B29C 33/30, B29C 45/73

(54) **Method for efficiently manufacturing various molded products**
Verfahren zur effizienten Herstellung von verschiedenen geformten Gegenständen
Procédé de production à haut rendement de produits moulés divers

(30) Priority: 31.01.2005 JP 2005022497
(43) Date of publication of application: 02.08.2006
(73) Proprietor: DENSO CORPORATION, Kariya-city, Aichi-pref., 448-8661 (JP)
(72) Inventor: Tamaki, Shuichi c/o Denso Corporation, Kariya-city Aichi-pref. 448-8661 (JP); Mitomi, Masaei c/o Denso Corporation, Kariya-city Aichi-pref. 448-8661 (JP); Narita, Yukinori c/o Denso Corporation, Kariya-city Aichi-pref. 448-8661 (JP); Takahashi, Mikio c/o Denso Corporation, Kariya-city Aichi-pref. 448-8661 (JP)
(74) Representative: Kuhnen & Wacker

(56) References cited:
- PATENT ABSTRACTS OF JAPAN vol. 013, no. 512 (M-893), 16 November 1989 (1989-11-16) -& JP 01 206013 A (DAIHATSU MOTOR CO LTD; others: 02), 18 August 1989 (1989-08-18)
- PATENT ABSTRACTS OF JAPAN vol. 016, no. 041 (M-1206), 31 January 1992 (1992-01-31) -& JP 03 247419 A (DAIHATSU MOTOR CO LTD), 5 November 1991 (1991-11-05)
- PATENT ABSTRACTS OF JAPAN vol. 1995, no. 08, 29 September 1995 (1995-09-29) -& JP 07 125010 A (NISSAN MOTOR CO LTD), 16 May 1995 (1995-05-16)

## Description

### BACKGROUND OF THE INVENTION

### 1. Field of the Invention

The present invention relates to a method and a molding machine for manufacturing resin molded products and, more particularly, to a method and a molding machine for molding plural kinds of molded products having different shapes by changing the shape of a product portion in a mold.

### 2. Description of the Related Art

As a prior art, there is a resin molding machine disclosed in, for example, Patent document 1 described below. Using the molding machine according to this prior art, it is possible to mold plural kinds of molded products from one mold by sliding a nest comprising plural dies corresponding to the shapes of plural kinds of molded products to replace part of a product portion of the mold with another.

In the case of this molding machine, when the number of times of molding of a first kind of molded product reaches a predetermined number, the operation of the molding machine is stopped and part of the product portion is replaced with a different die so as to fit to the product portion by sliding the nest. Next, the molding machine is restarted and a kind of molded product different from the first kind is molded.
[Patent document 1] Japanese Unexamined Patent Publication (Kokai) No. 6-278139

However, in the case of the molding machine according to the above-mentioned prior art, when the shape of a molded product to be molded is changed, the operation of the molding machine is stopped while the shape of a resin filled region of the product portion is changed by sliding and moving the nest. In other words, after a molding cycle for the first kind of molded product is put to rest, the nest is moved so as to correspond to the shape of a molded product to be molded next and then a molding cycle for the next kind of molded product is started to mold a molded product with a changed shape.

Therefore, when the frequency of changes in shape of molded products increases, there arises a problem that the ratio of time during which the molding cycle is not operated increases and the productivity is reduced.

Document JP-A-01206013 discloses a method in accordance with the preamble of claim 1.

### SUMMARY OF THE INVENTION

The above-mentioned problem being taken into account, the present invention has been developed and an object thereof is to provide a method for manufacturing molded products and a molding machine capable of preventing a productivity from decreasing even if the frequency of changes in shapes of molded products increases.

The invention is defined by the features of claim 1.

In order to attain the above-mentioned object, a molding method for manufacturing molded products according to a first aspect of the present invention comprises:
a molding cycle, which is a collection of processes to be performed sequentially, including, a filling process for filling molten resin into a product portion (30) of a mold (1) by injecting it, a cooling and solidifying process for cooling down and solidifying the molten resin in the product portion (30) filled in the filling process, a mold opening process for opening the mold (1), a taking-out process for taking out the solidified molded product from the product portion (30) of the opened mold (1), and a mold closing process for closing the mold (1); and
a product portion shape changing process for changing a shape of a molten resin filled region (31) in the filling process of the product portion (30) in accordance with plural kinds of molded products having different shapes; wherein the plural kinds of the molded products having different shapes are molded by repeating the molding cycle plural times while performing the product portion shape changing process; and wherein during one molding cycle (SA) of the plural-time molding cycles, the product portion shape changing process is performed in accordance with the shape of a molded product (B) to be molded in a next molding cycle (SB) following the one molding cycle (SA).

According to this, even when the shapes of the molded products (A, B) are changed, the shape of the product portion (30) is changed in accordance with the shape of the molded product (B) to be molded in the next molding cycle (SB) during the present one molding cycle (SA) and, therefore, it is not necessary to stop the molding cycle. As a result, even if the frequency of changes in shape of molded products (A, B) increases, it is possible to prevent the productivity from decreasing.

Further, as in a molding method according to a second aspect of the present invention, the product portion shape changing process in accordance with the shape of the molded product (B) to be molded in the next molding cycle (SB) can be performed during the period after the resin is cooled down and is solidified in the cooling and solidifying process until the mold closing process is completed in the one molding cycle (SA).

A molding method according to a third aspect of the present invention comprises :
a partition member (16) provided in the mold (1) which is moved to switch between a state in which part of the production portion (30) is isolated and a not-isolated state, in which part of the production portion (30) is not isolated, in the product portion shape changing process;
the plural-time molding cycles comprise a first molding cycle (SA) in which filling of molten resin into the part of the product portion (30) is shut off by the partition member (16) in the filling process and a second molding cycle (SB) in which the shut-off by the partition member (16) is not performed and filling of molten resin into the part of the product portion (30) is performed in the filling process;
the plural kinds of molded products having different shapes are molded in the plural-time molding cycles.

According to this, it is possible to easily change the shape of the molten resin filled region (31) by isolating or not isolating the part of the product portion (30) by the partition member (16). Therefore, it is easy to change the shape of the product portion (30) in accordance with the plural kinds of molded products (A, B).

A molding method according to a fourth aspect of the present inventionis such that in a case in which the shape of the molten resin filled region (31) is changed in the product portion shape changing process, a portion forming a molten resin not-filled region (32) of the product portion (30) is heated to a temperature higher than the dew point of the atmosphere surrounding the mold, in the filling process.

According to this, even if the atmosphere surrounding the mold flows, when the mold is opened, into the portion to be the molten resin not-filled region (32) of the product portion (30) that is not filled with molten resin in the filling process and therefore is likely to be readily cooled down, water condensation does not occur. Therefore, even when the molding cycle (SA) is entered, in which the region (32) is filled with molten resin, it is possible to obtain a molded product (A) excellent in quality.

A molding method according to a fifth aspect of the present invention is such that:
the mold (1) has a heat insulated space (15), in which supply paths (13, 14) are formed for supplying molten resin to the product portion (30) in the filling process and at the same time, a heating path forming member (12) is possessed for preventing solidification of the molten resin in the supply paths (13, 14) until the filling process of the next molding cycle (SB); and
that the portion to be the molten resin not-filled region (32) of the product portion (30) in the filling process is communicated with the heat insulated space (15) and the portion to be the molten resin not-filled region (32) is heated to a temperature higher than the dew point of the atmosphere on the periphery of the mold.

According to this, it is possible to prevent water condensation at the portion forming the molten resin not-filled region (32) of the product portion (30) in the filling process by utilizing the heat of the heating path forming member (12) for preventing solidification of the molten resin in the supply paths (13, 14).

A molding method according to a sixth aspect of the present invention is such that the product portion shape changing process comprises a shape changing member (16) provided in the mold (1) to change the shape of the molten resin filled region (31) of the product portion (30) and a shape changing member moving means (17) for moving the shape changing member (16), and controls the movement of the shape changing member moving means (17) in accordance with the shapes of the molded products (A, B) to be molded.

A molding method according to a seventh aspect of the present invention is such that the shape changing member (16) is the partition member (16) for switching between a state in which part of the product portion (30) is isolated and a not-isolated state in which part of the product portion (30) is not isolated.

According to this, it is easy to change the shape of the product portion (30) in accordance with the plural kinds of the molded products (A, B).

A molding method according to an eighth aspect of the present invention is such that the heating of the portion forming a molten resin not-filled region (32) is performed with heating means (12, 15, 18, 19), the heating means: comprising:
a heat insulated space (15) formed inside the mold;
a heating path forming member (12) formed inside the heat insulated space (15) to form supply paths (13, 14) for supplying molten resin to the product portion (30) and to prevent solidification of the molten resin in the supply paths (13, 14);
a communication path (18) provided inside the mold (1) to communicate the product portion (30) with the heat insulated space (15);
and an open/close means (19) for opening and closing the communication path (18); and in that
the open/close means (19) is controlled to operate so that the portion forming the molten resin not-filled region (32) of the product portion (30) is communicated with the heat insulated space (15) when molten resin is injected to the product portion (30) to fill it therewith.

According to this, it is possible to prevent water condensation at the portion forming the molten resin not-filled region (32) of the product portion (30) in the filling process by utilizing heat of the heating path forming member (12) for preventing solidification of the molten resin in the supply paths (13, 14).

The present invention may be more fully understood from the description of the preferred embodiments of the invention set forth below, together with the accompanying drawings.

### BRIEF DESCRIPTION OF THE DRAWINGS

In the drawings:
Fig.1 is a cross sectional view showing a general structure of a mold used for manufacture of plural molded products in a first embodiment to which the present invention is applied.
Fig.2 is a block diagram showing a general configuration of a molding machine (a molding system).
Fig.3A is a cross sectional views showing general structures of a molded product A to be molded.
Fig.3B is a cross sectional views showing general structures of a molded product B to be molded.
Fig.4 is a cross sectional view of a mold in a state for performing a part of a molding process for explaining a molding cycle.
Fig.5 is a cross sectional view of a mold in a state for performing another part of a molding process for explaining a molding cycle.
Fig.6 is a cross sectional view of a mold in a state for performing still another part of a molding process for explaining a molding cycle.
Fig.7A is an enlarged cross sectional view of essential portions of a mold, showing a case where a molded product A is molded.
Fig.7B is an enlarged cross sectional view of essential portions of a mold, showing a case where a molded product B is molded.
Fig.8 is a general configuration diagram for explaining an operation of a partition plate.
Fig.9 is a time chart showing an operation when a molding machine performs a molding cycle SA and a molding cycle SB continuously.
Fig.10A is a diagram showing a flow when molded products are molded successively, showing a case where the present invention is applied.
Fig.10B is a diagram showing a flow when molded products are molded successively, showing a case where a prior art is applied.
Fig.11A is an enlarged cross sectional view of essential portions of a mold in a second embodiment to which the present invention is applied, showing a case where a molded product A is molded.
Fig.11B is an enlarged cross sectional view of essential portions of a mold in a second embodiment to which the present invention is applied, showing a case where a molded product B is molded.
Fig.12 is an enlarged cross sectional view of essential portions of a mold in a third embodiment to which the present invention is applied.
Fig.13 is a diagram for explaining an operation of nesting.
Fig.14 is an enlarged cross sectional view of essential portions of a mold in a modification example of the third embodiment.
Fig.15 is a cross sectional view showing a general structure of a mold used for manufacture of plural mold products in a fourth embodiment to which the present invention is applied.

### DESCRIPTION OF THE PREFERRED EMBODIMENTS

Embodiments of the present invention are explained below with reference to drawings.

### (First embodiment)

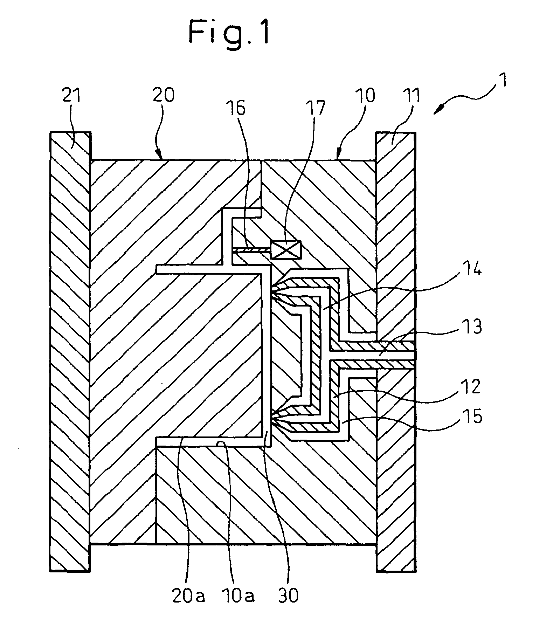

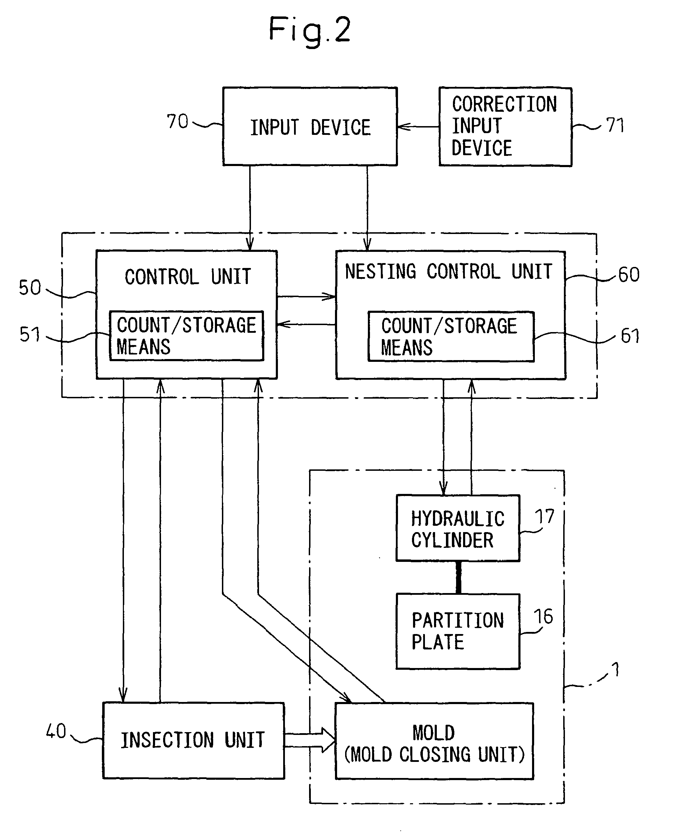

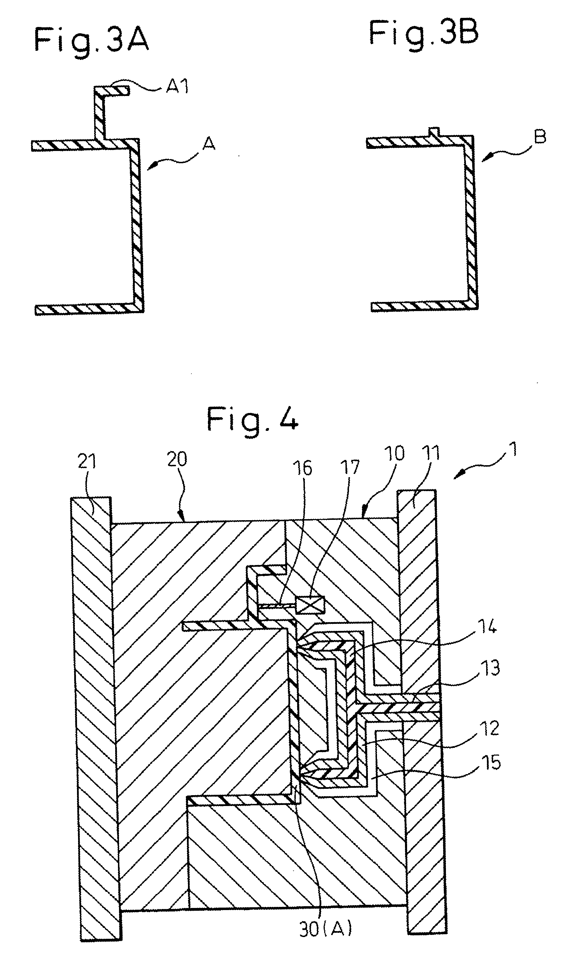

Fig.1 is a cross sectional view showing a general structure of a mold 1 used for manufacture of a molded product A and a molded product B in a first embodiment to which the present invention is applied, and Fig.2 is a block diagram showing a general configuration of a molding machine (a molding system) including the mold 1. Fig.3A and Fig.3B are cross sectional views showing general structures of the molded products A and B molded by the molding machine.

As shown in Fig.3A and Fig.3B, the molded products in the present embodiment are plural kinds of molded products (in the present embodiment, two kinds) having partially different shapes, that is, the molded product A in which a bracket portion A1 is integrally formed on the outer surface of a case body, and the molded product B forming a case body not having a bracket portion.

As shown in Fig.1, the mold 1 comprises a fixed die 10 having a fixed base 11 to be attached to a fixed platen of an injection molding machine, not shown, and a movable die 20 having a movable base 21 to be attached to a movable platen, not shown, capable of advancing toward and retracting from the fixed platen.

In the fixed die 10, a cavity portion 10a forming a recess shape toward the movable die 20 side is formed and in the movable die 20, a core portion 20a forming a protruding shape toward the fixed die 10 side is formed. Then, when the fixed die 10 and the movable die 20 meet together (mold clamping or closing), a space is formed between the cavity portion 10a of the fixed die 10 and the core portion 20a of the movable die 20. This space is a product portion 30 for molding the molded products A and B.

In the fixed die 10, a sprue 13 and a runner 14 forming a supply path of molten resin to the product portion 30 are formed. The sprue 13 and the runner 14 are formed in a manifold 12 so as to keep the temperature of the molten resin in the supply path and to prevent solidification of the molten resin in the supply path. The manifold 12 constitutes a so-called hot runner having a heating means and is arranged in an arrangement space 15 formed as a heat insulating space in the fixed die 10.

The fixed die 10 incorporates a partition plate 16, which is a partition member, and a hydraulic cylinder 17 for moving forward and back the partition plate 16 into and from the product portion 30.

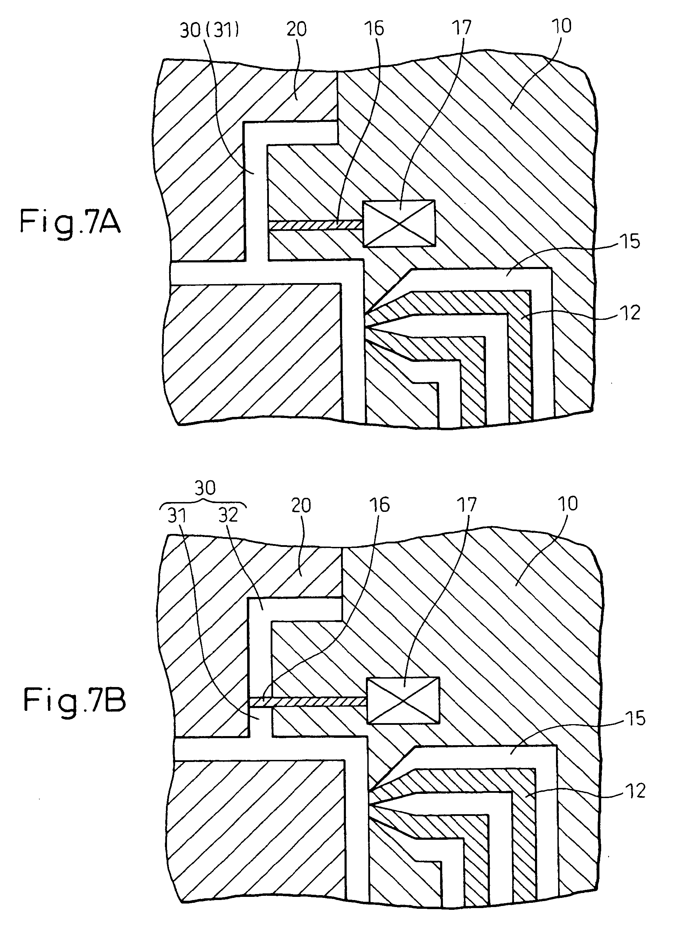

As shown enlargedly in Fig.7A, in a state in which the hydraulic cylinder 17 has moved back the partition plate 16 from the product portion 30, the whole region of the product portion 30 is a molten resin filled region 31. At this time, the molten resin filled region 31 of the product portion 30 (the entire region of the product portion 30) has a shape in accordance with the shape of the molded product A shown in Fig.3A.

On the other hand, as shown enlargedly in Fig.7B, in a state in which the hydraulic cylinder 17 has moved forward the partition plate 16 into the product portion 30, the partition plate 16 isolates part of the product portion 30 and the isolated region is a molten resin not-filled region 32 and the rest is the molten resin filled region 31. At this time, the molten resin filled region 31 of the product portion 30 has a shape in accordance with the shape of the molded product B shown in Fig.3B.

In other words, the partition plate 16 is a shape changing member in the present embodiment, which changes the shape of the molten resin filled region 31 of the product portion 30 by switching between a state in which part of the product portion 30 is isolated and a not-isolated state, and the hydraulic cylinder 17 is a shape changing member moving means in the present embodiment.

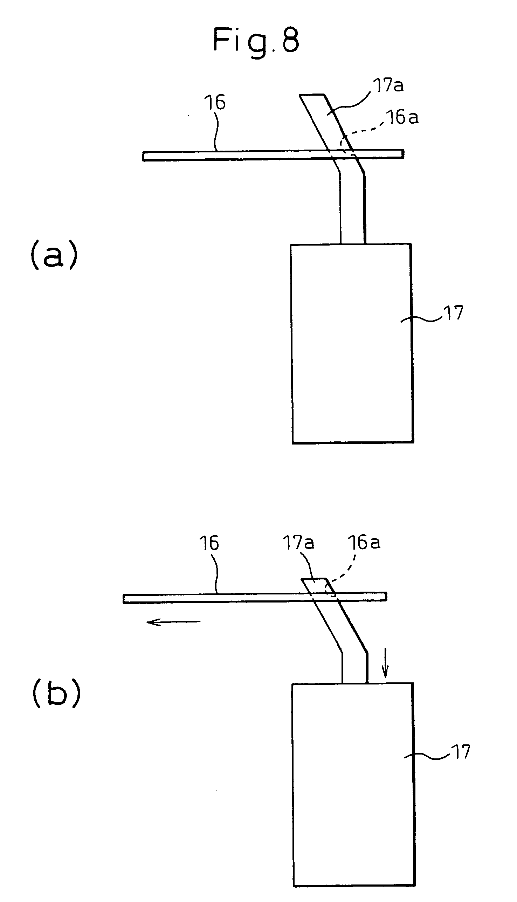

Specifically, as shown in Figs.8 (a) and 8 (b), an inclined rod 17a of the hydraulic cylinder 17 runs through a through hole 16a provided in the partition plate 16 and the movement of the partition plate 16 by the hydraulic cylinder 17 is carried out as the inclined rod 17a advances and retracts.

As shown in Fig.2, the main components of the molding machine in the present embodiment include the above-mentioned mold 1 incorporating the partition plate 16 and the hydraulic cylinder 17, and a well-known injection unit (an injection filling means) 40 for injecting molten resin into the mold 1, both mounted on a well-known molding machine mold clamping unit.

A control unit 50 controls operation of the mold clamping (closing) unit comprising the injection unit 40 and the mold 1.

The control unit 50 is designed so as to output signals to the mold clamping unit mounting the injection unit 40 and the mold 1 so that a well-known molding cycle is performed sequentially and a molten resin is injected to fill the product portion 30 of the mold 1 by the injection unit 40, the mold 1 is opened after the molten resin filled in the product portion 30 is cooled down and is solidified, the solidified molded products A and B are taken out from the product portion 30 of the opened mold 1, and the mold 1 is closed, as well as receiving operation completion signals and data signals from the mold clamping unit and the injection unit 40.

On the other hand, a nesting control unit 60 is designed so as to output operation signals to the hydraulic cylinder 17 incorporated in the mold 1 as well as receiving operation completion signals from the hydraulic cylinder 17.

The control unit 50 internally comprises a count/storage section 51, which is a count means and a storage means, and is designed so as to be capable of storing the molding conditions, the number of times of molding, and the order of molding of the molded products A and B input from an input device 70, which is an input means, as well as grasping the number of times of molding of each molded product and the progress status of molding cycle based on the signals from the injection unit 40 and the mold 1 (actually, the mold clamping unit).

On the other hand, the nesting control unit 60 internally comprises a count/storage means 61, which is a count means and a storage means and is, as in the control unit 50, designed so as to capable of storing the number of times of molding and the order of molding of the molded products A and B input from the input device 70 as well as grasping the operation status of the hydraulic cylinder 17 while judging the number of times of molding of each molded product and the progress status of the molding cycle based on information from the control unit 50.

Further, the control unit 50 is designed so as to be capable of grasping the operation status of the hydraulic cylinder 17 based on information from the nesting control unit 60. The control unit 50 and the nesting control unit 60 are control means in the present embodiment.

The input device 70 may be one that sequentially inputs information of the order of manufacture of the molded products A and B or one that inputs, in a batch, a collection of information of production plans etc.

Further, the input device 70 is designed so as to output correction information input from a correction input device 71 to both the control units 50 and 60. Due to this, it is made possible to correct a difference between the number of molding cycles and the number of manufactured molded products, which occurs owing to molding defects etc.

Next, a method for manufacturing a molded product by the molding machine having the above-mentioned configuration is explained.

Fig.4 to Fig.6 are cross sectional views for each process of the mold 1 for explaining a molding cycle for molding the molded product A.

When the control unit 50 shown in Fig.2 controls the injection unit 40 and the mold 1 (actually, the mold clamping unit) to mold the molded product A, first, as shown in Fig.4, a nozzle, which is not shown, of the injection unit 40 (refer to Fig.2) is caused to come into contact with an end portion on the upstream side of the sprue 13 of the closed mold 1 and a molten liquid resin is injected. Due to this, the product portion 30 is filled with the molten resin via the sprue 13 and the runner 14.

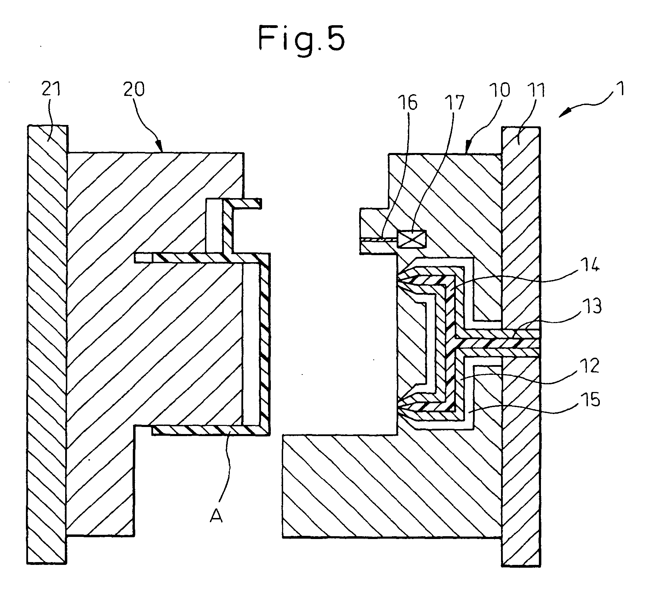

When the molten resin filled in the product portion 30 is cooled down and is solidified, and the molded product is molded, the fixed die 10 and the movable die 20 are opened as shown in Fig.5, an ejector, not shown, is operated to separate the molded product A from the mold, and the molded product A is taken out from between both the die 10 and the die 20 by a taking-out machine, not shown.

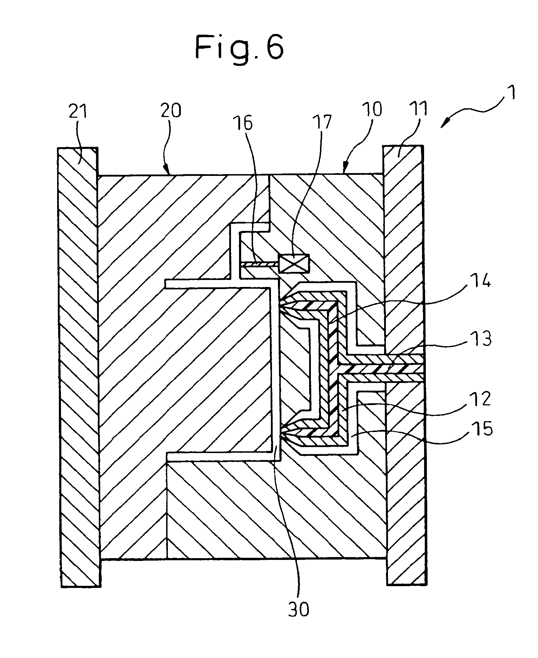

When the molded product A is taken out from the mold 1, the fixed die 10 and the movable die 20 meet with each other to close the mold 1 as shown in Fig.6. As described above, in the present embodiment, a molten resin supply path to the product portion 30 of the mold 1 is employed as a so-called hot runner system and, therefore, there is no need to remove the resin in the sprue 13 and the runner 14.

Here, the process shown in Fig.4 is a filling process for injecting to fill a molten resin in the product portion 30 of the mold 1 and at the same time, is a cooling process for cooling down to solidify the molten resin in the product portion 30 filled in the filling process. The process shown in Fig.5 is a mold opening process for opening the mold 1 and at the same time, is a taking-out process for taking out the solidified molded product A from the product portion 30 of the opened mold 1. Further, the process shown in Fig.6 is a mold closing process for closing the mold 1.

In contrast to this, when the molded product B is molded, before the filling process is initiated, part of the product portion 30 is isolated by the partition plate 16 and the shape of the molten resin filled region 31 of the product portion 30 is made to correspond to the molded product B, as shown in Fig.7B. Then, it is possible to mold the molded product B by a molding cycle comprising the same processes as those for molding the molded products A described above. The process for switching between the state shown in Fig.7A and the state shown in Fig.7B is a product portion shape changing process in the present embodiment.

Here, an operation is explained when the molding cycle of the molding machine in the present embodiment is switched from a molding cycle SA for molding the molded product A to a molding cycle SB for molding the molded product B.

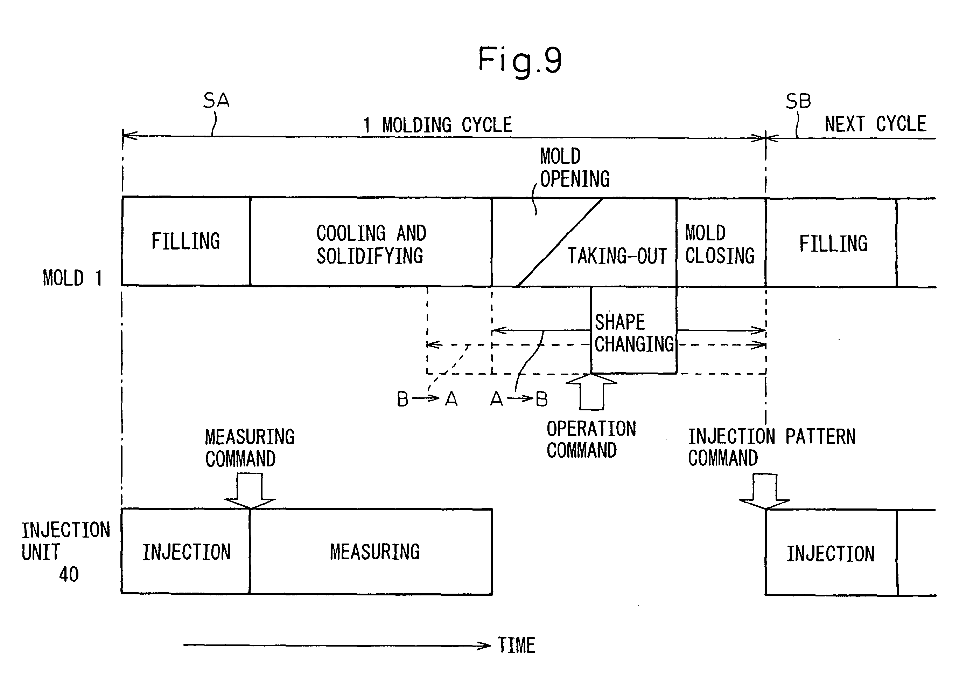

Fig.9 is a time chart showing an operation when the molding machine performs the molding cycle SA and the molding cycle SB continuously.

When the molding cycle SA is performed by the control of the control unit 50 of the molding machine, in the mold 1, the filling process, the cooling process, the mold opening process, the taking-out process, and the mold closing process are performed sequentially, as described above.

During the period of taking-out the molded product A from the mold 1, the hydraulic cylinder 17 is operated by the control of the nesting control unit 60 of the molding machine such that the partition plate 16 is moved to shut off the product portion 30 to isolate a part thereof. Due to this, the shape of the molten resin filled region 31 in accordance with the filling process in the next molding cycle SB is formed.

On the other hand, in the injection unit 40, the injecting process (injecting operation and pressure maintaining operation) for injecting the molten resin to fill the product portion 30 of the mold 1 in the filling process is performed, and when the injecting process is completed, a measuring process of the molten resin for the injecting process of the next molding cycle SB is performed.

As described above, when the molding cycle SA and the molding cycle SB are performed continuously, during one molding cycle SA, the entire switching operation to prepare for the next molding cycle SB is performed.

Specifically, by the time of the completion of the injecting process (by the time of the completion of the filling process) in the molding cycle SA by the injection unit 40, directions are given for measuring the amount of the molten resin in accordance with the amount of injection and filling in the next molding cycle SB by the control unit 40. Further, by the time of the start of the injecting process (by the time of the start of the filling process) in the next molding cycle SB, directions are given as to the injection pattern (molding conditions) in the molding cycle SB by the control unit 40.

On the other hand, during the period of the taking-out process, in the mold 1, directions are give as to the operation of the hydraulic cylinder 17 by the nesting control unit 60, whereby the shape of the molten resin filled region 31 of the product portion 30 is changed by the partition plate 16. It is only necessary to change the shape of the molten resin filled region after the mold opening process is started and by the time of completion of the mold closing process (before the filling process of the next molding cycle SB is started) in the molding cycle SA. Due to this, it is possible to move the partition plate 16 without interfering with the molded product A.

Although the operation when the molding cycle of the molding machine is switched from the molding cycle SA for molding the molded product A to the molding cycle SB for molding the molded product B is described here, the operation when the molding cycle SB is switched to the molding cycle SA is performed in the same manner.

However, when switching from the molding cycle SB to the molding cycle SA, it is only necessary to change the shape of the molten resin filled region after the molten resin is cooled down and is solidified (after the resin in contact with the partition plate 16 is solidified and becomes difficult to be changed in shape) in the cooling process in the molding cycle SB and before the mold closing process is completed (before the filling process in the next molding cycle SA is started).

According to the configuration and operation described above, when the shape of the molded product to be molded in the next molding cycle is changed from the shape of the molded product to be molded in the present molding cycle (before the next molding cycle, described above), the shape changing process of the molten resin filled region 31 of the product portion 30 is performed in accordance with the shape of the molded product to be molded in the next molding cycle during the present one molding cycle.

Consequently, it is not necessary to stop the molding cycle in order to change the shapes of the molded products A and B. Therefore, even if the frequency of changes in shape of the molded products A and B increases, it is possible to prevent the productivity from decreasing.

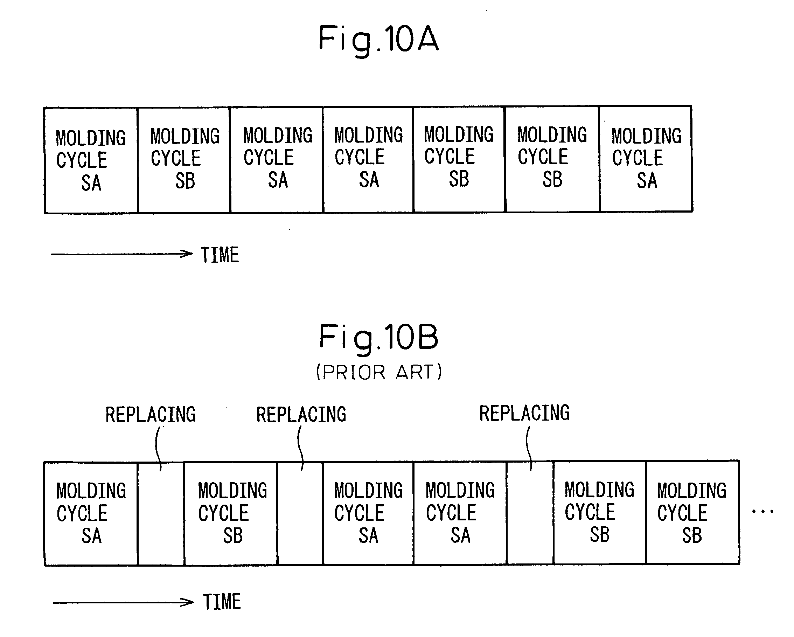

For example, when A to B to A to A to B to B to A is input as an order of molding of molded products from the input device 70 shown in Fig.2 to the control means (the control unit 50 and the nesting control unit 60), according to the molding machine in the present embodiment, it is possible to perform molding without stopping the molding cycle as shown in Fig.10A. On the other hand, it is difficult for the molding machine in the prior art to increase productivity as in the present embodiment because of the need to stop the molding cycle to move the nest.

In contrast to this, in the prior art, it is possible to increase the productivity of plural kinds of molded products having different shapes by molding the products having the same shape continuously to reduce the number of times of nest movement. However, when molding is performed in an order other than the required order of different molded products in after processes, it is necessary to store molded products between the molding process and the after processes.

In the present embodiment, it is easy to save a storage space of molded products because molding of various molded products can be performed in a specific order in accordance with the required order of different molded products in the after processes.

Further, by only switching between the state in which part of the product portion 30 is isolated and the not-isolated state using the partition plate 16, the shape of the molten resin filled region 31 can be changed easily. Therefore, it is possible to quickly and easily change the shape of the product portions 30 in accordance with the plural kinds of products A and B.

### (Second embodiment)

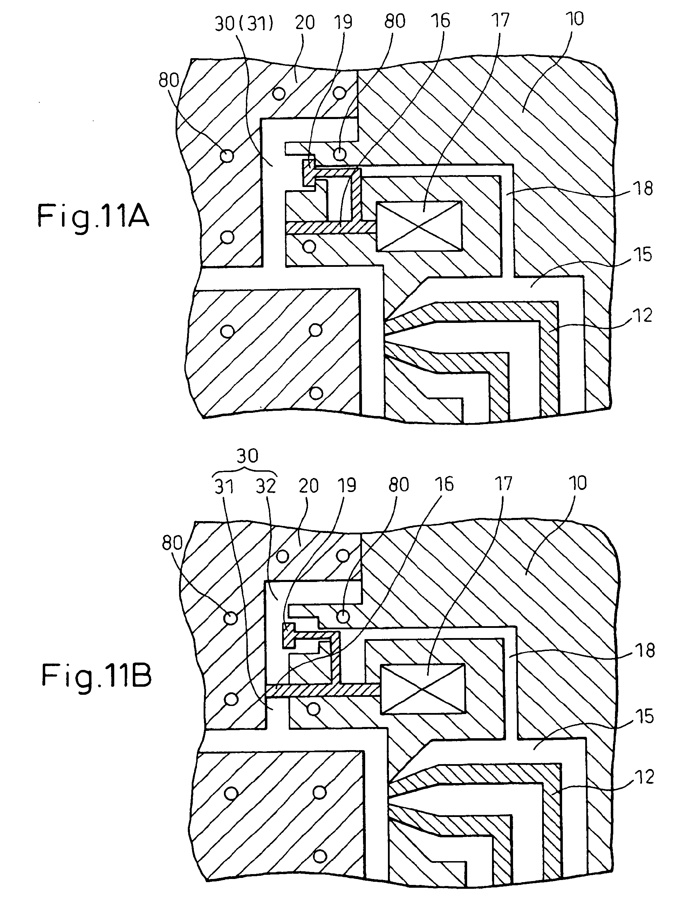

Next, a second embodiment is explained based on Fig.11A and Fig.11B.

The second embodiment differs from the above-mentioned first embodiment in that measures for preventing water condensation are taken in the molten resin not-filled region of the product portion of the mold. The same portions as those in the first embodiment are assigned with the same symbols and their explanation is omitted.

As shown in the cross sectional views of mold essential portions in Fig.11A and Fig.11B, in the present embodiment, a communication path 18 is provided, through which the arrangement space 15 for heat isolation in which the manifold 12 is arranged-is communicated with the portion to be the molten resin not-filled region 32 when the partition plate 16 isolates part of the product portion 30.

The end portion on the product portion 30 side of the communication path 18 is provided with an open/close valve 19 as an open/close means for opening and closing the communication path 18. The open/close valve 19 is provided integrally with the partition plate 16 and as shown in Fig.11A so as to block the communication path 18 in the state in which the partition plate 16 has retracted from the product portion 30 and part of the product portion 30 is not isolated.

Although not shown in detail, the open/close valve 19 employs a needle valve and even if the molten resin flows into the product portion 30 when the open/close valve 19 blocks the communication path 18, it is possible to prevent the molten resin from flowing into the communication path 18 without fail.

Further, as shown in Fig.11B, in the state in which the partition plate 16 has advanced into the product portion 30 and part of the product portion 30 is isolated, the communication path 18 is opened and the communication path 18 causes the arrangement space 15 to communicate with the molten resin not-filled region 32 of the product portion 30.

According to the configuration and operation described above, as shown in Fig.11B, it is possible to introduce a relatively high temperature atmosphere in the arrangement space 15 in which the manifold 12 is arranged to the portion to be the not-filled region 32 in the filling process in the molding cycle SB for molding the molded product B via the communication path 18 to heat the die portion surrounding the molten resin not-filled region 32.

A constitution comprising the manifold 12, the arrangement space 15, the communication path 18, and the open/close valve 19 can be said as a heating means in the present embodiment.

As shown in Fig.11A and Fig.11B, cooling pipes 80 are provided in the fixed die 10 and the movable die 20 so that it is possible for the filled molten resin to be cooled down and solidified stably.

The arrangement of the cooling pipes 80 is decided while taking into consideration the molding cycle SA for the molded product A in which the entire area in the product portion 30 is filled with the molten resin. Therefore, when the molding cycle SB for molding the molded product B is performed subsequently after the molding cycle SA, if the molten resin not-filled region 32 is not heated, the temperature on the periphery of the molten resin not-filled region 32 shown in Fig.11B falls.

When the temperature at this portion falls below the dew point of the atmosphere in the factory, that is, the atmosphere on the periphery of the mold 1, each time the mold opening process is performed in the molding cycle SB, condensed water is generated on the inner surface of the die forming the molten resin not-filled region 32.

In the state in which the generated condensed water is present, if the molding cycle is switched to the molding cycle SA for molding the molded product A, the molten resin not-filled region 32 in the molding cycle SB in which condensed water is generated is changed into the molten resin filled region 31 in the molding cycle SA and the bracket portion A1 of the molded product 1 will be poorly molded by the influence of the condensed water.

However, in the present embodiment, the portion to be the molten resin not-filled region 32 in the molding cycle SB is heated to a temperature higher than the dew point of the atmosphere on the periphery of the mold 1 by utilizing the atmosphere in the arrangement space 15 in which the manifold 12 is arranged, therefore, it is possible to prevent condensed water from being generated and thus prevent poor molding.

Specifically, in the present embodiment, the molding machine is arranged under the conditions that the maximum atmosphere temperature is 32°C and the maximum atmosphere humidity is 80%. Although the dew point of the atmosphere is 29°C, even when cooling water at a temperature 15°C is caused to flow through the cooling pipes 80, the portion forming the molten resin not-filled region 32 in the molding cycle SB is kept at about 34°C by the atmosphere in the arrangement space 15 in which the manifold 12 is arranged. Therefore, even if the molding cycle SB is performed subsequently after the molding cycle SA, it is unlikely that condensed water is generated on the surface forming the product portion 30.

In the present embodiment, as in the first embodiment, in the molding machine that performs the shape changing process of the molten resin filled region 31 of the product portion 30 in accordance with the shape of the molded product to be molded in the next molding cycle during the present one molding cycle, water condensation in the molten resin not-filled region 32 of the product portion 30 is prevented by utilizing the atmosphere in the arrangement space 15 in which the manifold 12 is arranged, however, for the molding machine in the operation of which the molding cycle is stopped in order to move the nest as in the prior art, it is possible to prevent poor molding caused by condensed water by employing the same method for preventing condensation as in the present embodiment for the portion that is no longer in contact with the molten resin when the nest is moved.

The open/close valve 19 in the present embodiment may be a separate part from the partition plate 16 and the valve 19 and the partition plate 16 may be moved by respective drive means.

### (Third embodiment)

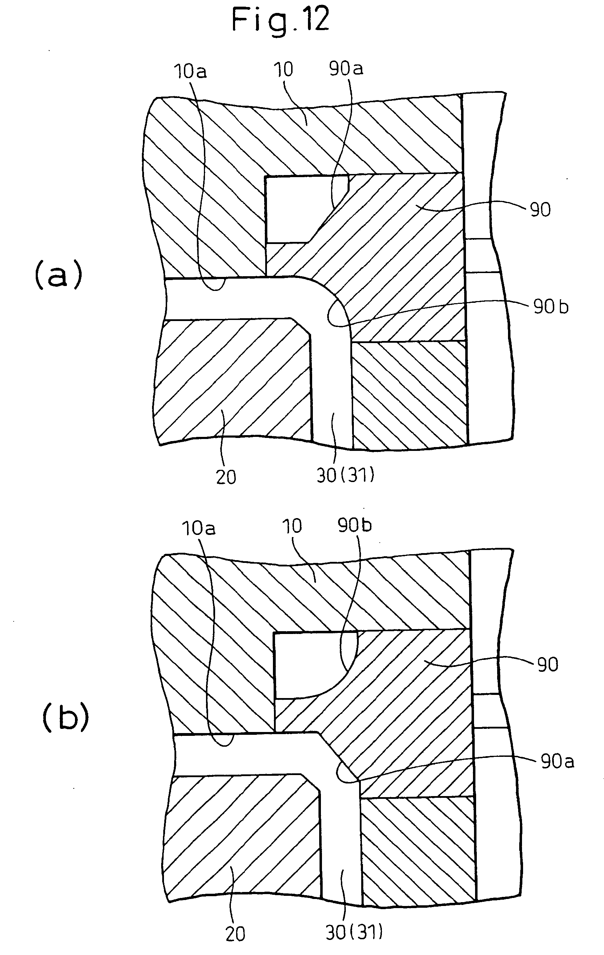

Next, a third embodiment is explained based on Fig.12 to Fig.14.

The third embodiment differs from the first embodiment described above in the configuration for changing the shape of the molten resin filled region of the product portion of the mold. The same portions as those in the first embodiment are assigned with the same symbols and their explanation is omitted.

As shown in the cross sectional views of mold essential portions in Fig.12 (a) and Fig.12 (b), in the fixed die 10 of the present embodiment, the shape of the molten resin filled region 31 of the product portion 30 is changed by reversing a nest 90 in which die shapes 90a and 90b constituting a part of the cavity 10a are formed on both the upper and the lower surfaces of the nest 90, respectively, as shown in Fig.12.

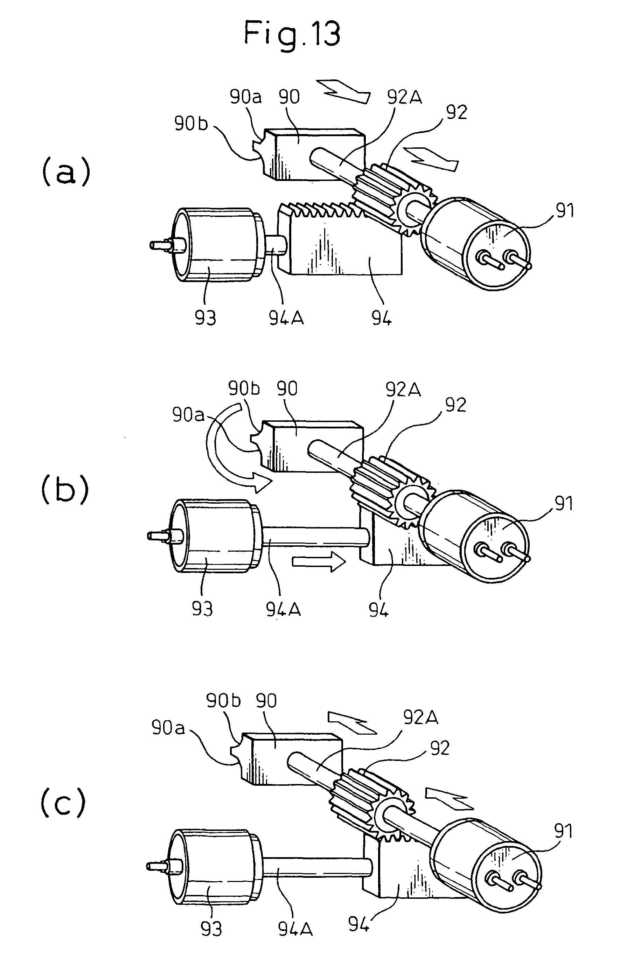

In the operation for reversing the nest 90, first, as shown in Fig.13 (a), a shaft 92A comprising a pinion 92 is retracted (moved in the upward direction out of the plane of the paper) by the action of an action means 91 and the nest 90 is pulled out from the fixed die.

Next, as shown in Fig.13 (b), a shaft 94A comprising a rack 94 is advanced (moved toward the right-hand side in the figure) by the action of an action means 93, the rack 92 engaged with the rack 94 is rotated, and the nest 90 is reversed.

After reversing of the nest 90 is completed, as shown in Fig.13 (c), the shaft 92A comprising the pinion 92 is advanced (moved in the downward direction into the plane of the paper) by the action of the action means 91 and the nest 90 is assembled into the fixed die.

In this manner, the shape of the molten resin filled region 31 of the product portion 30 shown in Fig.12 (a) and the shape of the molten resin filled region 31 of the product portion 30 shown in Fig.12 (b) are changed.

Here, the nest 90 is a shape changing member in the present embodiment and the constitution including the shaft 92A comprising the action means 91 and 93 and the pinion 92, and the shaft 94A comprising the rack 94 is a shape changing member moving means in the present embodiment.

By changing the shape of the molten resin filled region 31 of the product portion 30 by reversing the nest 90 as described above in accordance with the shape of the molded product to be molded in the next molding cycle during one molding cycle, as in the first embodiment, it is not necessary to stop the molding cycle in order to change the shape of the molded product. In this manner, even if the frequency of change in the shape of molded products increases, it is possible to prevent productivity from decreasing.

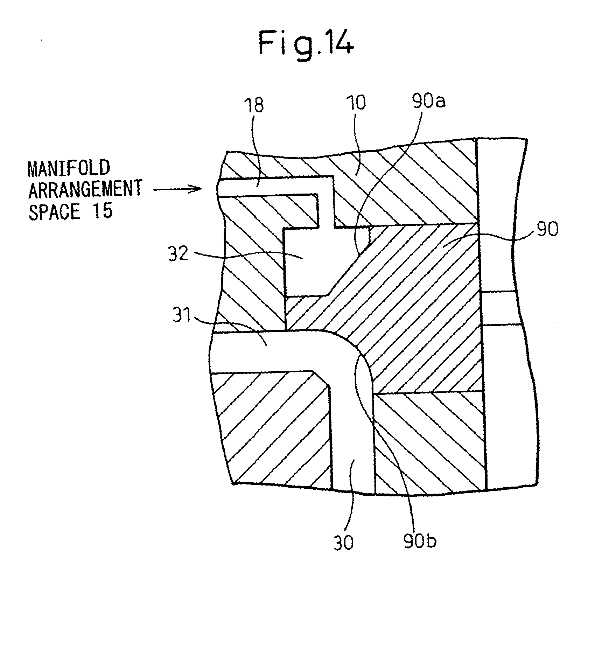

In the present embodiment also, as shown in Fig.14, by configuring the portion forming the molten resin not-filled region 32 of the product portion 30 so as to communicate with the arrangement space 15 in which the manifold 12 is arranged, it is possible to prevent water condensation at this portion as in the second embodiment.

### (Fourth embodiment)

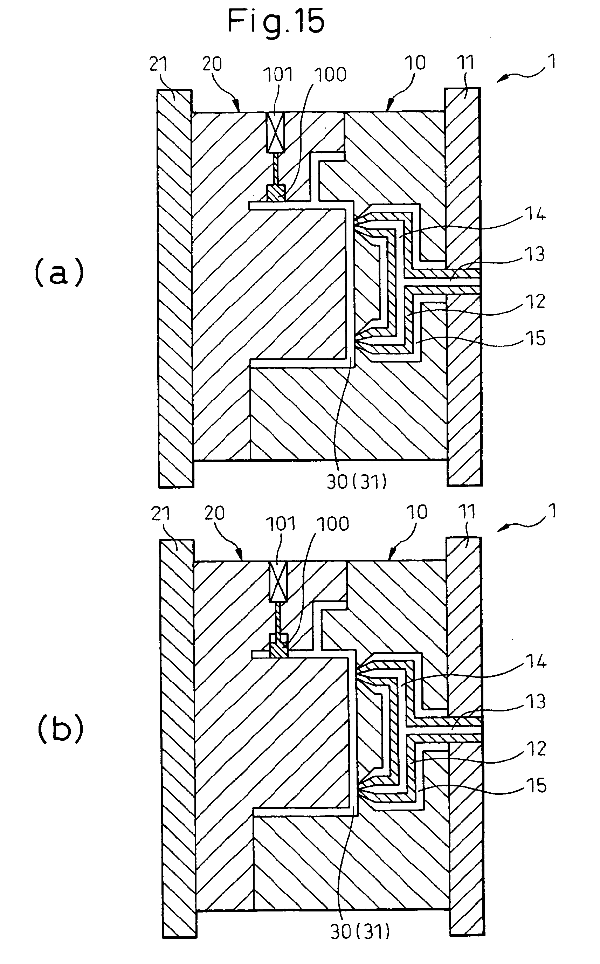

Next, a fourth embodiment is explained based on Fig.15.

The fourth embodiment differs from the first embodiment described above in the configuration for changing the shape of the molten resin filled region of the product portion of the mold. The same portions as those in the first embodiment are assigned with the same symbols and an explanation is omitted.

As shown in the cross sectional views of a mold in Fig.15 (a) and Fig.15 (b), in the present embodiment, there are provided in the movable die 20 a nest 100 for forming a through hole in a molded product and a hydraulic cylinder 101 for moving forward and back the nest 100 into and from the product portion 30.

Due to this, the shape of the molten resin filled region 31 of the product portion 30 shown in Fig.15 (a) and the shape of the molten resin filled region 31 of the product portion 30 shown in Fig.15 (b) are changed and a molded product with a through hole and a molded product without a through hole can be molded.

Here, the nest 100 is a shape changing member in the present embodiment and the hydraulic cylinder 101 is a shape changing member moving means in the present embodiment.

By changing the shape of the molten resin filled region 31 of the product portion 30 by advancing and retracting the nest 90 as described above in accordance with the shape of the molded product to be molded in the next molding cycle during the present one molding cycle, as in the first embodiment, it is not necessary to stop the molding cycle in order to change the shape of the molded product. In this manner, even if the frequency of changes in shape of molded products increases, it is possible to prevent productivity from decreasing.

### (Other embodiments)

In the second and third embodiments described above, water condensation in the molten resin not-filled region is prevented by utilizing the heat of the manifold 12. However, it is not limited to this, and for those that utilize the heat of the heating path forming member for heating the supply path of the resin to the product portion 30, it is possible to prevent water condensation without the need to provide a dedicated heating means. The heating path forming member may be only, for example, a hot sprue.

Further, it may also be possible to prevent water condensation in the molten resin not-filled region by providing a dedicated heating means such as a heater.

In each of the embodiments described above, the shape changing member moving means is a hydraulic cylinder, however, it is not limited to this, and it may be, for example, a servo motor etc.

Further, in each of the embodiments described above, a hot runner system is employed in the resin supply path, however, even when a cold runner system is employed and a molded product is molded in a molding cycle including a process for removing a runner resin, the present invention can be applied effectively. If a process for changing the shape of the molten resin filled region of the product portion is performed in accordance with the shape of a molded product to be molded in the next molding cycle during the present one molding cycle, it is not necessary to stop the molding cycle in order to change the shape of the molded product.

In each of the embodiments described above, two molded products having different shapes are molded using the same mold, however, the present invention can be applied effectively to a case where three or more molded products are molded.

## Claims

1. A method for manufacturing molded products, comprising:
a molding cycle, which is a collection of processes to be performed sequentially, including,
a filling process for filling molten resin into a product portion (30) of a mold (1) by injecting the molten resin,
a cooling and solidifying process for cooling down wand solidifying the molten resin in the product portion (30) filled in the filling process,
a mold opening process for opening the mold (1),
a taking-out process for taking out the solidified molded product from the product portion (30) of the opened mold (1), and
a mold closing process for closing the mold (1); and
a product portion shape changing process for changing a shape of a molten resin filled region (31) in the filling process of the product portion (30) in accordance with plural kinds of the molded products having different shapes; **characterized in that**
the plural kinds of the molded products having different shapes are molded by repeating the molding cycle plural times while performing the product portion shape changing process; and **in that**
during one molding cycle (SA) of the plural-time molding cycles, the product portion shape changing process is performed in accordance with the shape of a molded product (B) to be molded in a next molding cycle (SB) following the one molding cycle (SA).

2. The method for manufacturing molded products as set forth in claim 1, wherein the product portion shape changing process is performed during the period after the resin is cooled down and is solidified in the cooling and solidifying process until the mold closing process is completed in the one molding cycle (SA).

3. The method for manufacturing molded products as set forth in claim 1, wherein:
a partition member (16) provided in the mold (1) is moved to switch between a state in which part of the production portion (30) is isolated and a not-isolated state in which part of the production portion (30) is not isolated, in the product portion shape changing process; wherein
the plural-time molding cycles comprise a first molding cycle (SA) in which filling of molten resin into the part of the product portion (30) is shut off by the partition member (16) in the filling process and a second molding cycle (SB) in which the shut-off by the partition member (16) is not performed and filling of molten resin into the part of the product portion (30) is also performed in the filling process; and wherein
the plural kinds of molded products having different shapes are molded in the plural-time molding cycles.

4. The method for manufacturing molded products as set forth in claim 1, wherein in a case in which the shape of the molten resin filled region (31) is changed in the product portion shape changing process, a portion forming a molten resin not-filled region (32) of the product portion (30) is heated to a temperature higher than dew point of atmosphere surrounding the mold in the filling process.

5. The method for manufacturing molded products as set forth in claim 4, wherein
the mold (1) has a heat insulated space (15), in which supply paths (13, 14) are formed for supplying molten resin to the product portion (30) in the filling process and, at the same time, a heating path forming member (12) is included for preventing solidification of the molten resin in the supply paths (13, 14) until the filling process of the next molding cycle (SB), and wherein
in the filling process, the portion forming the molten resin not-filled region (32) of the product portion (30) is communicated with the heat insulated space (15) and the portion forming the molten resin not-filled region (32) is heated to a temperature higher than dew point of atmosphere surrounding the mold.

6. The method for manufacturing molded products as set forth in claim 1, wherein the product portion shape changing process comprises a shape changing member (16) provided in the mold (1) to change a shape of the molten resin filled region (31) of the product portion (30), and a shape changing member moving means (17) for moving the shape changing member (16), and controls movement of the shape changing member moving means (17) in accordance with shapes of the molded products (A, B) to be molded.

7. The method for manufacturing molded products as set forth in claim 6, wherein the shape changing member (16) is the partition member (16) for switching between a state in which part of the product portion (30) is an isolated and a not-isolated state.

8. The method for manufacturing molded products as set forth in claim 4, wherein the heating of the portion forming a molten resin not-filled region (31) is performed with heating means (12, 15, 18, 19), the heating means comprising:
a heat insulated space (15) formed inside the mold;
a heating path forming member (12) formed inside the heat insulated space (15) to form supply paths (13, 14) for supplying molten resin to the product portion (30) and to prevent solidification of the molten resin in the supply paths (13, 14);
a communication path (18) provided inside the mold (1) to communicate the product portion (30) with the heat insulated space (15);
and an open/close means (19) for opening and closing the communication path (18); and wherein
the open/close means (19) is controlled to operate so that the portion forming the molten resin not-filled region (32) of the product portion (30) is communicated with the heat insulated space (15) when molten resin is injected to the product portion (30) to fill it therewith.

## Patentansprüche

1. Verfahren zur Herstellung von Formprodukten, beinhaltend:
einen Formzyklus, wobei es sich dabei um eine Ansammlung von Verfahrensschritten handelt, die nacheinander ausgeführt werden sollen, beinhaltend
einen Befüllungsvorgang zum Befüllen eines Produktbereichs (30) einer Form (1) mit einem geschmolzenen Harz, indem das geschmolzene Harz eingespritzt wird,
einen Abkühl- und Verfestigungsvorgang zum Abkühlen und Verfestigen des geschmolzenen Harzes in dem Produktbereich (30), der in dem Befüllungsvorgang befüllt wurde,
einen Formöffnungsvorgang zum Öffnen der Form (1),
einen Entnahmevorgang zum Entnehmen des verfestigten Formprodukts aus dem Produktbereich (30) der geöffneten Form (1), und
einen Formschließungsvorgang zum Schließen der Form (1); und
einen Produktbereichsform-Änderungsvorgang zum Ändern einer Form eines mit dem geschmolzenen Harz befüllten Bereichs (31) in dem Befüllungsvorgang des Produktbereichs (30) gemäß mehrerer Arten der unterschiedliche Formen aufweisenden Formprodukte; **dadurch gekennzeichnet, dass**
die mehreren Arten der unterschiedliche Formen aufweisenden Formprodukte geformt werden, indem der Formzyklus mehrere Male wiederholt wird, während der Produktbereichsform-Änderungsvorgang ausgeführt wird; und dadurch, dass
während eines Formzyklus (SA) der mehrere Male ausgeführten Formzyklen, der Produktbereichsform-Änderungsvorgang entsprechend der Form eines Formprodukts (B), das in einem nächsten Formzyklus (SB), der auf den einen Formzyklus (SA) folgt, ausgeführt wird.

2. Verfahren zur Herstellung von Formprodukten nach Anspruch 1, wobei der Produktbereichsform-Änderungsvorgang während der Zeitspanne, nachdem das Harz sich in dem Abkühl- und Verfestigungsvorgang abgekühlt und verfestigt hat, bis zur Beendung des Formschließungsvorgangs in dem einen Formzyklus (SA) ausgeführt wird.

3. Verfahren zur Herstellung von Formprodukten nach Anspruch 1, wobei:
ein Trennelement (16), das in der Form (1) angeordnet ist, bewegt wird, um im Produktbereichsform-Änderungsvorgang zwischen einem Zustand, in dem ein Teil des Produktionsbereichs (30) isoliert ist, und einem nichtisolierten Zustand, in dem ein Teil des Produktionsbereichs (30) nicht isoliert ist, zu wechseln; wobei
die mehrere Male ausgeführten Formzyklen einen ersten Formzyklus (SA), in dem in dem Befüllungsvorgang ein Befüllen des Teils des Produktbereichs (30) mit dem geschmolzenen Harz durch das Trennelement (16) unterbrochen wird, und einen zweiten Formzyklus (SB) aufweisen, in dem die Unterbrechung durch das Trennelement (16) nicht ausgeführt wird und in dem Befüllungsvorgang auch ein Befüllen des Teils des Produktbereichs (30) mit dem geschmolzenen Harz ausgeführt wird; und wobei
die mehreren Arten von unterschiedliche Formen aufweisenden Formprodukten in den mehrere Male ausgeführten Formzyklen geformt werden.

4. Verfahren zur Herstellung von Formprodukten nach Anspruch 1, wobei in einem Fall, in dem die Form des mit dem geschmolzenen Harz befüllten Bereichs (31) in dem Produktbereichsform-Änderungsvorgang geändert wird, ein Bereich, der einen nicht mit geschmolzenem Harz befüllten Bereich (32) des Produktbereichs (30) ausbildet, auf eine Temperatur erwärmt wird, die höher als ein Taupunkt der Atmosphäre ist, von der die Form in dem Befüllungsvorgang umgeben ist.

5. Verfahren zur Herstellung von Formprodukten nach Anspruch 4, wobei
die Form (1) einen wärmeisolierten Raum (15) aufweist, in dem Zuführwege (13, 14) zum Zuführen eines geschmolzenen Harzes zum Produktbereich (30) in dem Befüllungsvorgang ausgebildet sind, und gleichzeitig ein einen Erwärmungsweg ausbildendes Element (12) beinhaltet ist, um eine Verfestigung des geschmolzenen Harzes in den Zuführwegen (13, 14) bis zum Befüllungsvorgang des nächsten Formzyklus (SB) zu verhindern, und wobei
in dem Befüllungsvorgang, der Bereich, der den nicht mit geschmolzenem Harz befüllten Bereich (32) des Produktbereichs (30) ausbildet, mit dem wärmeisolierten Raum (15) in Verbindung gelangt, und der Bereich, der den nicht mit dem geschmolzenen Harz befüllten Bereich (32) ausbildet, auf eine Temperatur erwärmt wird, die höher als der Taupunkt der Atmosphäre ist, von der die Form umgeben ist.

6. Verfahren zur Herstellung von Formprodukten nach Anspruch 1, wobei der Produktbereichsform-Änderungsvorgang ein Formänderungselement (16), das in der Form (1) angeordnet ist, um eine Form des mit dem geschmolzenen Harz befüllten Bereichs (31) des Produktbereich (30) zu ändern, und eine Formänderungselement-Bewegungseinrichtung (17) zum Bewegen des Formänderungselements (16) aufweist, und eine Bewegung der Formänderungselement-Bewegungseinrichtung (17) gemäß den Formen der Formprodukte (A, B), die geformt werden sollen, steuert.

7. Verfahren zur Herstellung von Formprodukten nach Anspruch 6, wobei es sich bei dem Formänderungselement (16) um das Trennelement (16) zum Wechseln zwischen einem Zustand handelt, in dem ein Teil des Produktbereichs (30) sich in einem isolierten Zustand und einem nicht isolierten Zustand befindet.

8. Verfahren zur Herstellung von Formprodukten nach Anspruch 4, wobei das Erwärmen des Bereichs, der einen nicht mit geschmolzenem Harz befüllten Bereich (31) ausbildet, mit einer Heizeinrichtung (12, 15, 18, 19) ausgeführt wird, wobei die Heizeinrichtung aufweist:
einen wärmeisolierten Raum (15), der innerhalb der Form ausgebildet wird;
ein einen Wärmeweg bildendes Element (12), das innerhalb des wärmeisolierten Raums (15) ausgebildet ist, um Zuführwege (13, 14) zum Zuführen von geschmolzenem Harz zum Produktbereich (30) auszubilden und um eine Verfestigung des geschmolzenen Harzes in den Zuführwegen (13, 14) zu verhindern;
einen Verbindungsweg (18), der innerhalb der Form (1) angeordnet ist, um den Produktbereich (30) mit dem wärmeisolierten Raum (15) zu verbinden;
und eine Öffnungs- / Schließeinrichtung (19) zum Öffnen und Schließen des Verbindungswegs (18); und wobei
die Öffnungs- / Schließeinrichtung (19) gesteuert wird, um so betrieben zu werden, dass der Bereich, der den nicht mit geschmolzenem Harz befüllten Bereich (32) des Produktbereichs (30) ausbildet, mit dem wärmeisolierten Raum (15) verbunden wird, wenn das geschmolzene Harz in den Produktbereich (30) eingespritzt wird, um ihn damit zu befüllen.

## Revendications

1. Procédé de fabrication de produits moulés, comprenant :
un cycle de moulage, qui est un ensemble de processus à effectuer de manière séquentielle, comprenant,
un processus de remplissage pour remplir une résine fondue dans une portion de produit (30) d'un moule (1) en injectant la résine fondue,
un processus de refroidissement et de solidification pour refroidir et solidifier la résine fondue dans la portion de produit (30) remplie dans le processus de remplissage,
un processus d'ouverture de moule pour ouvrir le moule (1),
un processus d'extraction pour extraire le produit moulé solidifié de la portion de produit (30) du moule (1) ouvert, et
un processus de fermeture de moule pour fermer le moule (1) ; et
un processus de changement de la forme de la portion de produit pour changer une forme d'une région (31) remplie de résine fondue dans le processus de remplissage de la portion de produit (30) conformément à plusieurs types des produits moulés ayant différentes formes ;
**caractérisé en ce que**
la pluralité des types des produits moulés ayant différentes formes sont moulés en répétant le cycle de moulage plusieurs fois tout en effectuant le processus de changement de la forme de la portion de produit ; et **en ce que**
pendant un cycle de moulage (SA) parmi les plusieurs cycles de moulage, le processus de changement de la forme de la portion de produit est effectué conformément à la forme d'un produit (B) moulé devant être moulé dans un cycle de moulage (SB) suivant qui suit le cycle de moulage (SA).

2. Procédé de fabrication de produits moulés selon la revendication 1, dans lequel le processus de changement de la forme de la portion de produit est effectué pendant la période qui suit le refroidissement de la résine et est solidifiée dans le processus de refroidissement et de solidification jusqu'à ce que le processus de fermeture de moule soit complété dans le cycle de moulage (SA).

3. Procédé de fabrication de produits moulés selon la revendication 1, dans lequel :
un organe de séparation (16) pourvu dans le moule (1) est déplacé pour basculer entre un état dans lequel une partie de la portion de produit (30) est isolée et un état sans isolation dans lequel une partie de la portion de produit (30) n'est pas isolée, dans le processus de changement de la forme de la portion de produit ; dans lequel
la pluralité de cycles de moulage comprennent un premier cycle de moulage (SA) dans lequel le remplissage d'une résine fondue dans la partie de la portion de produit (30) est interrompu par l'organe de séparation (16) dans le processus de remplissage et un deuxième cycle de moulage (SB) dans lequel l'interruption par l'organe de séparation (16) n'est pas effectuée et le remplissage de la résine fondue dans la partie de la portion de produit (30) est également effectué dans le processus de remplissage ; et dans lequel
les plusieurs types de produits moulés ayant différentes formes sont moulés dans les plusieurs cycles de moulage.

4. Procédé de fabrication de produits moulés selon la revendication 1, dans lequel dans un cas où la forme de la région (31) remplie de résine fondue est modifiée dans le processus de changement de la forme de la portion de produit, une portion formant une région (32) qui n'est pas remplie de résine fondue de la portion de produit (30) est chauffée à une température supérieure au point de rosée de l'atmosphère entourant le moule dans le processus de remplissage.

5. Procédé de fabrication de produits moulés selon la revendication 4, dans lequel
le moule (1) a un espace (15) isolé thermiquement, dans lequel des chemins d'alimentation (13, 14) sont formés pour fournir une résine fondue à la portion de produit (30) dans le processus de remplissage et, en même temps, un organe (12) formant un chemin de chauffage est compris afin d'empêcher la solidification de la résine fondue dans les chemins d'alimentation (13, 14) jusqu'au processus de remplissage du cycle de moulage (SB) suivant, et dans lequel
dans le processus de remplissage, la portion formant la région (32) qui n'est pas remplie de résine fondue de la portion de produit (30) communique avec l'espace (15) isolé thermiquement et la portion formant la région (32) qui n'est pas remplie de résine fondue est chauffée à une température supérieure au point de rosée de l'atmosphère entourant le moule.

6. Procédé de fabrication de produits moulés selon la revendication 1, dans lequel le processus de changement de la forme de la portion de produit comprend un organe (16) de changement de formes pourvu dans le moule (1) pour changer une forme de la région (31) remplie de résine fondue de la portion de produit (30), et un moyen (17) de déplacement de l'organe de changement de forme pour déplacer l'organe (16) de changement de forme, et commande le mouvement du moyen (17) de déplacement de l'organe de changement de forme conformément à des formes des produits moulés (A, B) à mouler.

7. Procédé de fabrication de produits moulés selon la revendication 6, dans lequel l'organe (16) de changement de forme est l'organe de séparation (16) pour basculer entre un état dans lequel une partie de la portion de produit (30) est un état isolé et un état sans isolation.

8. Procédé de fabrication de produits moulés selon la revendication 4, dans lequel le chauffage de la portion formant une région (31) qui n'est pas remplie de résine fondue est effectué avec un moyen de chauffage (12, 15, 18, 19), le moyen de chauffage comprenant :
un espace (15) isolé thermiquement formé à l'intérieur du moule ;
un organe (12) formant un chemin de chauffage formé à l'intérieur de l'espace (15) isolé thermiquement pour former des chemins d'alimentation (13, 14) afin de fournir la résine fondue à la portion de produit (30) et afin d'empêcher la solidification de la résine fondue dans les chemins d'alimentation (13, 14) ;
un chemin de communication (18) pourvu dans le moule (1) pour faire communiquer la portion de produit (30) avec l'espace (15) isolé thermiquement ;
et un moyen (19) d'ouverture/fermeture pour ouvrir et fermer le chemin de communication (18) ; et dans lequel
le moyen (19) d'ouverture/fermeture est commandé pour fonctionner de sorte que la portion formant la région (32) qui n'est pas remplie de résine fondue de la portion de produit (30) communique avec l'espace (15) isolé thermiquement lorsque la résine fondue est injectée à la portion de produit (30) pour la remplir.
